(19) Europäisches Patentamt
European Patent Office
Office européen des brevets

(11) Veröffentlichungsnummer: **0 007 503**
**B1**

(12) **EUROPÄISCHE PATENTSCHRIFT**

(45) Veröffentlichungstag der Patentschrift: **24.02.82**

(51) Int. Cl.³: **C 08 G 18/22**

(21) Anmeldenummer: **79102331.0**

(22) Anmeldetag: **09.07.79**

(54) **Verfahren zur Herstellung von Polyurethan-Giesselastomeren und ihre Verwendung.**

(30) Priorität: **22.07.78 DE 2832315**

(43) Veröffentlichungstag der Anmeldung:
**06.02.80 Patentblatt 80/3**

(45) Bekanntmachung des Hinweises auf die Patenterteilung:
**24.02.82 Patentblatt 82/8**

(84) Benannte Vertragsstaaten:
**BE DE FR GB IT NL**

(56) Entgegenhaltungen:
**DE - A - 2 339 980**
**DE - A1 - 2 550 180**
**DE - A1 - 2 657 413**
**US - A - 4 067 832**

(73) Patentinhaber: **BAYER AG**
**Zentralbereich Patente, Marken und Lizenzen**
**D-5090 Leverkusen 1, Bayerwerk (DE)**

(72) Erfinder: **Schwindt, Jürgen, Dr.**
**Kleist-Platz 4**
**D-5090 Leverkusen 1 (DE)**
Erfinder: **Meyborg, Holger, Dr.**
**Bergstrasse 92**
**D-5068 Odenthal (DE)**
Erfinder: **Grögler, Gerhard, Dr.**
**von Diergardt-Strasse 46**
**D-5090 Leverkusen 1 (DE)**
Erfinder: **Recker, Klaus, Dr.**
**Wolfskaul 6**
**D-5000 Köln 80 (DE)**

**EP 0 007 503 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung von Polyurethan-Giesselastomeren und ihre Verwendung

Die vorliegende Erfindung betrifft ein Verfahren zur Herstellung von lichtechten, transparenten Gießelastomeren mittels neuartiger Katalysatorkombinationen. Die erfindungsgemäß hergestellten Polyurethane können für die verschiedensten Zwecke eingesetzt werden, z.B. als Beschichtungs- oder Vergußmassen, für Verpackungsfolien oder im biomedizinischen Bereich.

Es ist bekannt, daß auch lichtstabilisierte Polyurethansysteme auf Basis aromatischer Diisocyanate (z.B. Toluylendiisocyanat, Diisocyanatodiphenylmethan u.a.), bei längerer Lichteinwirkung stark vergilben und somit die Anforderungen der obengenannten Anwendungsgebiete nicht erfüllen. Weiter ist bekannt, daß Polyurethane, insbesondere Polyurethanlacke, auf Basis aliphatischer oder alicyclischer Polyisocyanate eine derartige Vergilbungstendenz im allgemeinen nicht zeigen.

Der naheliegende Gedanke, diesen Erfahrungen entsprechend auch bei der Herstellung von lichtechten transparenten Polyurethanelastomeren aliphatische oder alicyclische Polyisocyanate einzusetzen, scheiterte bislang an der im Verlaufe der Polyadditionsreaktion auftretenden starken Trübung, der mangelhaften Wärmestandfestigkeit und dem ungenügenden mechanischen Werteniveau der Elastomeren.

In der DE - B - 1 745 418 wird ein Verfahren zur Herstellung von gegebenenfalls geschäumten Polyurethanformkörpern auf Basis aromatischer oder aliphatischer Polyisocyanate beschrieben, bei dem als Katalysatoren für die Polyisocyanat-Polyadditionsreaktion Diazabicyclo-Verbindungen, z.B. 1,8-Diazabicyclo-(5.4.0)-undecen oder dessen Ammoniumsalze, gegebenenfalls in Kombination mit metallorganischen Verbindungen, z.B. Dibutylzinndilaurat, verwendet werden.

Die Verwendung derartiger Katalysatoren oder Katalysatorkombinationen oder anderer Katalysatoren wie Diazabicyclo-(2.2.2)-octan zur Herstellung von Polyurethanformkörpern auf Basis aliphatischer oder alicyclischer Polyisocyanate verbessert die Wärmestandfestigkeit und das mechanische Werteniveau der Elastomere nicht, und führt auch zu trüben, mit Blasen durchsetzten Formkörpern. Die Blasenbildung ist (unter drastischer Verkürzung der Topfzeit der Polyurethanmischungen, die eine praxisgerechte Verarbeitung unmöglich macht) nur bei Verwendung sehr hoher Katalysatorkonzentrationen zu vermeiden. Nachteile hoher Katalysatorkonzentrationen sind aber Verfärbung und Katalyse der Rückreaktion.

Auch nach den Verfahren gemäß DE—OS 2 550 180 sowie US—PS 4 067 832 gelingt es nicht, lichtechte, transparente Polyurethanelastomere herzustellen, die nicht mit den Nachteilen der Trübung und der Blasenbildung behaftet sind. Auch die DE—OS 2 339 980 liefert keine Hinweise zur Vermeidung dieser Nachteile.

Es war somit Aufgabe der vorliegenden Erfindung, ein neues Verfahren zur Verfügung zu stellen, welches die Herstellung von lichtechten, transparenten Elastomeren auf Basis aliphatischer oder alicyclischer Polyurethane gestattet, die nicht mit den Nachteilen der Trübung, Blasenbildung und des geringen Wärmestandes behaftet sind und die sich nach den Erfordernissen der Praxis (ausreichend lange Topfzeit und kurze Formstandzeit) verarbeiten lassen und kalt- bzw. heißhärtend sind.

Überraschenderweise wurde gefunden, daß bei Verwendung ganz bestimmter ausgewählter Katalysatorkombinationen die genannten Nachteile vermieden und Elastomere von sehr gutem mechanischem Verteniveau bei praxisgerechtem Verarbeitungszyklus erhalten werden.

Gegenstand der vorliegenden Erfindung ist ein Verfahren zur Herstellung eines lichtechten, transparenten Polyurethanelastomeren durch Umsetzung von

A) 90 bis 50 Gew.-%, bezogen auf Polyurethanfeststoff, einer mindestens 2 Zerewitinoff-aktive Wasserstoffatome aufweisenden Verbindung vom Molekulargewicht 400 bis 10 000,
B) 50 bis 10 Gew.-%, bezogen auf Polyurethanfeststoff, eines aliphatischen und/oder alicyclischen Polyisocyanats,
C) 0 bis 20 Gew.-%, bezogen auf Polyurethanfeststoff, eines Kettenverlängerungsmittels vom Molekulargewicht 60 bis 400, in Gegenwart von
D) Katalysatoren für die Isocyanat-Polyadditionsreaktion,

welches dadurch gekennzeichnet ist, daß als Komponente D) eine Katalysator-Kombination aus

a) einem Alkali- und/oder Erdalkalihydroxid, insbesondere Lithium-, Natrium-, Kalium-, Magnesium- und/oder Calciumhydroxid und
b) einer schwefelhaltigen metallorganischen Verbindung der allgemeinen Formeln

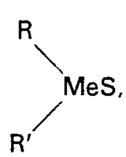, 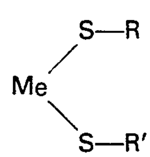 und

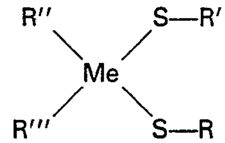

in denen

Me Zinn oder Blei, Vorzugsweise Zinn, darstellt,

R, R', R'' und R''' gleich oder verschieden sind und für einen verzweigten oder linearen Alkylrest mit 1 bis 20 C-Atomen, vorzugsweise[4] bis 12 C-Atomen, oder einen gegebenenfalls durch $C_1$—$C_4$-Alkylgruppen substituierten Cycloalkylrest mit 6 bis 15 C-Atomen oder einen gegebenenfalls durch $C_1$—$C_4$-Alkylgruppen oder Halogen substituierten Phenylrest stehen, verwendet wird.

Besonders bevorzugt sind Verbindungen der allgemeinen Formel

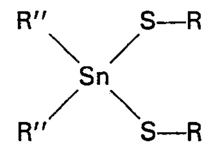

in welcher

R für einen gegebenenfalls verzweigten Alkylrest mit 8 bis 12 C-Atomen und

R'' für einen gegebenenfalls verzweigten Alkylrest mit 4 bis 8 C-Atomen stehen.

Als schwefelhaltige Katalysatoren seien beispielhaft genannt: Dibutylzinn(IV) sulfid, Dioctylzinn(IV) sulfid, Dibutylzin (IV) bis-dodecylmercaptid, Dioctylzinn (IV)-bis-dodecylmercaptid und Zinn(II)-bis-(2-äthylhexylmercaptid). Dibutylzinn(IV)-bis-dodecylmercaptid ist erfindungsgemäß besonders bevorzugt.

Die erfindungsgemäßen Katalysator-Kombinationen werden normalerweise in Mengen von 0,005—4 Gew.-%, vorzugsweise 0,01—0,8 Gew.-%, bezogen auf Polyurethanfeststoff, eingesetzt, wobei das Molverhältnis von Alkali- und/oder Erdalkalihydroxid zu metallorganischer Verbindung 3:1 bis 1:6, vorzugsweise 1,5:1 bis 1:3, beträgt und das Alkali- und/oder Erdalkalihydroxid vorzugsweise in Form einer 1 bis 20 %igen, vorzugsweise 5—15 %igen Lösung in einem niedermolekularen Polyol vorliegt. Sie können dem Reaktionsgemisch sowohl getrennt als Einzelkomponenten als auch als Mischung der Komponenten zugesetzt werden.

Beim erfindungsgemäßen Verfahren werden als aliphatisches oder cycloaliphatisches Polyisocyanat (Komponente B) vorzugsweise NCO-Gruppen aufweisende Prepolymere oder Lösungen der Prepolymere in monomeren aliphatischen oder cycloaliphatischen Diisocyanaten (sogenannte Semiprepolymere") eingesetzt. Die Prepolymeren bzw. Semiprepolymeren weisen im allgemeinen einen mittleren NCO-Gehalt von 14 bis 28 Gew.-% auf. Sie werden durch Umsetzung von beliebigen monomeren aliphatischen oder cycloaliphatischen Diisocyanaten mit den weiter unten näher beschriebenen, höhermolekularen und/oder niedermolekularen, vorzugsweise aliphatisch gebundene Hydroxylgruppen aufweisenden Polyhydroxylverbindungen der in der Polyurethanchemie an sich bekannten Art, in einem NCO/OH-Äquivalentverhältnis von im allgemeinen 1,5:1 bis 5:1, vorzugsweise 2,2:1 bis 3:1, besonders bevorzugt ca. 2,5:1, hergestellt.

Erfindungsgemäß geeignete monomere Diisocyanate werden z.B. von W. Siefken in Justus Liebig's Annalen der Chemie, 562, Seiten 75 bis 136, beschrieben; beispielsweise seien genannt Äthylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,5,5-trimethyl-5-isocyanatomethylcyclohexan (DE—A 1 202 785, amerikanische Patentschrift 3 401 190), 2.4- und 2,6-Hexahydrotoluylendiisocyanat sowie beliebige Gemische dieser Isomeren, Hexahydro-1,3- und-oder -1,4-phenylen-diisocyanat, sowie Perhydro-2,4'- und/oder -4,4'-diphenylmethan-diisocyanat. Besonders bevorzugt werden erfindungsgemäß Hexamethylendiisocyanat und 1-Isocyanato-3,3,5-trimethyl-5-isocyanatomethylcyclohexan (Isophorondiisocyanat) verwendet.

Geeignete Polyisocyanate sind ferner die in der Polyurethanchemie an sich bekannten Carbodiimid-, Allophanat-, Isocyanurat-, Biuret- und/oder acylierte Harnstoffgruppen aufweisenden aliphatischen und alicyclischen Polyisocyanate.

Als Komponente A) im erfindungsgemäßen Verfahren bzw. zum Aufbau der Prepolymeren oder Semiprepolymeren zu verwendende Verbindungen sind solche mit mindestens zwei gegenüber Isocyanaten reaktionsfähigen Wasserstoffatomen von einem Molekulargewicht in der Regel von 400—10 000. Hierunter versteht man neben Aminogruppen oder Thiolgruppen aufweisenden Verbindungen vorzugsweise Polyhydroxylverbindungen, insbesondere zwei bis acht aliphatisch gebundene Hydroxylgruppen aufweisende Verbindungen, speziell solche vom Molekulargewicht 800 bis 6000, vorzugsweise 1000 bis 4000, z.B. mindestens zwei, in der Regel 2 bis 8, vorzugsweise aber 2 bis

4, Hydroxylgruppen aufweisende Polyester, Polyäther, Polythioäther und Polycarbonate, wie sie für die Herstellung von homogenen und von zellförmigen Polyurethanen an sich bekannt sind, bzw. deren Gemische. Erfindungsgemäß bevorzugt sind Polyester, Polycarbonate und Alkoxylierungsprodukte von 4,4'-Dihydroxy-diphenylpropan (Bisphenol A).

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumersäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. $\varepsilon$-Caprolacton, oder aus Hydroxycarbonsäuren, z.B. $\omega$-Hydroxycapronsäure, sind einsetzbar.

Erfindungsgemäß bevorzugt sind Polyester auf Basis aliphatischer Carbonsäuren (insbesondere Adipinsäure), und aliphatischer Diole mit 2 bis 6 C-Atomen und/oder Bisphenol A.

Auch die erfindungsgemäß in Frage kommenden, mindestens zwei, vorzugsweise zwei bis drei Hydroxylgruppen aufweisenden Polyäther sind solche der an sich bekannten Art und werden z.B. durch Polymerisation von cycl. Äthern wie Tetrahydrofuran mit sich selbst, z.B. in Gegenwart von $BF_3$, oder durch Anlagerung von Epoxiden wie Äthylenoxid, Propylenoxid, Butylenoxid, Styroloxid oder Epichlorhydrin, gegebenenfalls im Gemisch oder nacheinander, an Startkomponenten mit reaktionsfähigen Wasserstoffatomen wie 4,4'-Dihydroxy-diphenylpropan hergestellt. Vorzugsweise werden diese Polyäther erfindungsgemäß jedoch nicht allein sondern in Kombination mit einem Polyester- oder Polycarbonatpolyol eingesetzt.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

Die genannten Polyhydroxylverbindungen können vor ihrer Verwendung im Polyisocyanat-Polyadditionsverfahren noch in der verschiedensten Weise modifiziert werden: So läßt sich gemäß DE-Offenlegungsschriften 2 210 839 (US-Patentschrift 3 849 515) und 2 544 195 ein Gemisch aus verschiedenen Polyhydroxylverbindungen (z.B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z.B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen Cyansäureestern Triazingruppen einzuführen.

Vertreter der genannten erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z.B. auf den Seiten 45—71, beschrieben. Selbstverständlich können Mischungen der obengenannten Verbindungen mit mindestens zwei gegenüber Isocyanaten reaktionsfähigen Wasserstoffatomen mit einem Molekulargewicht von 400—10 000, z.B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

Als erfindungsgemäß gegebenenfalls einzusetzende Ausgangskomponenten C) bzw. auch für den Aufbau der NCO-Prepolymere und -Semiprepolymere kommen Verbindungen mit mindestens zwei gegenüber Isocyanaten reaktionsfähigen Wasserstoffatomen mit einem Molekulargewicht von

60—400, insbesondere 90—300, in Frage. Auch in diesem Fall versteht man hierunter Hydroxylgruppen und/oder Thiolgruppen und/oder Carboxylgruppen aufweisende Verbindungen, vorzugsweise Hydroxylgruppen aufweisende Verbindungen, die als Kettenverlängerungsmittel oder Vernetzungsmittel dienen. Diese Verbindungen weisen in der Regel 2 bis 8 gegenüber Isocyanaten reaktionsfähige Wasserstoffatome auf, vorzugsweise 2 oder 3 reaktionsfähige Wasserstoffatome.

Auch in diesem Fall können Mischungen von verschiedenen Verbindungen mit mindestens zwei gegenüber Isocyanaten reaktionsfähigen Wasserstoffatomen mit einem Molekulargewicht von 60—400, insbesondere 90—300, verwendet werden.

Als Beispiele für derartige Verbindungen seien genannt:

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Dihydroxymethyl-hydrochinon, 1,4-Phenylen-bis-(β-hydroxyäthyläther), Hydrazinoäthanol, Esterdiole der allgemeinen Formeln

$$HO-(CH_2)_x-CO-O-(CH_2)_y-OH$$

und

$$HO-(CH_2)_x-O-CO-P-CO-O-(CH_2)_x-OH$$

in denen

R einen Alkylenrest mit 1—10, vorzugsweise 2—6, C-Atomen bzw. einen Cycloalkylen- oder Arylenrest mit 6—10 C-Atomen

$x = 2—6$ und

$y = 3—5$

bedeuten,

z.B. δ-Hydroxybutyl-ε-hydroxy-capronsäureester, ω-Hydroxyhexyl-γ-hydroxybuttersäureester, Adipinsäure-bis-(β-hydroxyäthyl)ester und Terephthalsäure-bis(β-hydroxyäthyl)ester;

Diolurethane der allgemeinen Formel

$$HO-(CH_2)_x-O-CO-NH-R'-NH-CO-O-(CH_2)_x-OH$$

in der

R' einen Alkylenrest mit 2—15, vorzugsweise 2—6, C-Atomen oder einen Cycloalkylen- oder Arylenrest mit 6—15 C-Atomen und

x eine Zahl zwischen 2 und 6

darstellen,

z.B. 1,6-Hexamethylen-bis-(β-hydroxyäthylurethan) oder 4,4'-Diphenylmethan-bis-(δ-hydroxybutylurethan);

sowie Diolharnstoffe der allgemeinen Formel

$$HO-(CH_2)_x-\underset{R'''}{\underset{|}{N}}-CO-NH-R''-NH-CO-\underset{R'''}{\underset{|}{N}}-(CH_2)_x-OH$$

in der

R'' einen Alkylenrest mit 2—15, vorzugsweise 2—9, C-Atomen oder einen Cycloalkylen- oder Arylenrest mit 6—15 C-Atomen,

R''' Wasserstoff oder eine Methylgruppe und

x die Zahlen 2 oder 3

bedeuten,

z.B. 4,4'-Diphenylmethan-bis-(β-hydroxyäthylharnstoff) oder die Verbindung

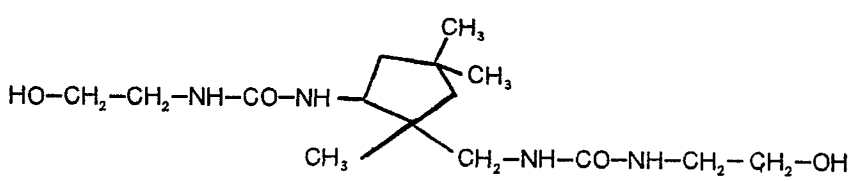

Als Kettenverlängerungsmittel können erfindungsgemäß auch Verbindungen wie 1-Mercapto-3-aminopropan und gegebenenfalls substituierte Aminosäuren, z.B. Glycin, Alanin, Valin, Serin und Lysin verwendet werden.

Ferner können gegenüber Isocyanaten monofunktionelle Verbindungen in Anteilen von 0,01 bis 10 Gew.-4, bezogen auf Polyurethanfeststoff, als sogenannte Kettenabbrecher mitverwendet werden. Derartige monofunktionelle Verbindungen sind z.B. Monoalkohole wie Butanol, 2-Äthylhexanol, Octanol, Dodecanol, die verschiedenen Amylalkohole, Cyclohexanol, Äthylenglykolmonoäther usw.

Im allgemeinen wird bei der Herstellung der lichtechten, transparenten Polyurethanelastomere eine Kennzahl von 80—150, vorzugsweise 90—120 (d.h. ein Äquivalentverhältnis von Isocyanat- zu Hydroxylgruppen von etwa 0,8:1 bis 1,5:1, vorzugsweise 0,9:1 bis 1,2:1) eingehalten.

Die Herstellung der Polyurethankunststoffe kann beispielsweise so geschehen, daß man in einer diskontinuierlich oder kontinuierlich arbeitenden Mischvorrichtung die beschriebenen Komponenten einstufig oder in mehreren Stufen miteinander vermischt und das entstandene Gemisch (zumeist außerhalb der Mischvorrichtung) in Formen oder auf geeigneten Unterlagen ausreagieren läßt. Die erfindungsgemäß zu verwendenden Katalysatoren werden dabei im allgemeinen zusammen mit den Komponenten A) und/oder C) eingesetzt, bevorzugt, wie schon erwähnt, in Form einer Lösung im Kettenverlängerungsmittel C). Die beiden Katalysatorkomponenten können dabei sowohl getrennt als auch bereits vorvermischt in das Reaktionsgemisch eingebracht werden.

Die Verarbeitungstemperaturen können zwischen 10°C und 150°C liegen, bevorzugt ist jedoch der Bereich zwischen 20°C und 75°C. Eine besonders bevorzugte Arbeitsweise besteht darin, daß man die Komponenten bei Raumtemperatur vereinigt und anschließend bei 100 bis 110°C innerhalb von 10 Minuten ausheizt oder bei Raumtemperatur aushärten läßt.

Man kann das Gemisch der Komponenten auch in kalte oder erhitzte Formen pressen, gießen oder spritzgießen und es in diesen Formen, seien es Relief- oder massive oder Hohlformen, gegebenenfalls im Schleuderguß bei Raumtemperatur aushärten lassen. Die erfindungsgemäß hergestellten Polyurethane finden z.B. als Beschichtungsmaterialien für Polyvinylchloridfolien oder -platten, Glas oder Metall, als Zwischenschichten für Verbundglas, als Folien für Verpackungszwecke und auch im biomedizinischen Bereich, z.B. als Behälter für Blutkonserven, für Katheter oder als Eingußmeterial für Hohlfasern eines künstlichen Nieren-Moduls Verwendung.

Die folgenden Beispiele erläutern das erfindungsgemäße Verfahren zur Herstellung lichtechter, transparenter Gießelastomere. Wenn nicht anders vermerkt, sind Mengenangaben als Gewichtsteile bzw. Gewichtsprozente zu verstehen.

### Beispiel 1
### (Vergleichsversuch):

Eine Mischung aus 10 Teilen Butandiol-1,4 und 100 Teilen eines Polyesterpolyols vom mittleren Molekulargewicht 2000 (OH-Zahl: 56) aus Adipinsäure, Äthylenglykol und Butandiol wird bei Raumtemperatur mit 0,3 Teilen Kupferoleat und 96,6 Teilen eines Prepolymers mit einem NCO-Gehalt von 15,2% aus Hexamethylendiisocyanat und Dirpopylenglykol innerhalb von 30 Sekunden vermischt (Äquivalentverhältnis NCO:OH 1,1:1) und in eine auf 90°C vorgewärmte Form gegossen. Das reagierende Gemisch bleibt bei Raumtemperatur 14 Minauten gießbar. Der Gießling kann nach 2 Minuten entformt werden, zeigt eine starke Trübung und Blasenbildung und erweicht bei 90 bis 100°C. Nach einer Temperzeit von 24 h bei 80°C werden folgende mechanische Eigenschaften gemessen:

| | | |
|---|---|---|
| Zugfestigkeit | (DIN 53 504) | 2,8 MPa |
| Bruchdehnung | (DIN 53 504) | 785% |
| Weiterreißwiderstand | (DIN 53 515) | 10 KN/m |
| Shore-Härte A | (DIN 53 505) | 48 |

### Beispiel 2
### (Vergleichsversuch):

Beispiel 1 wird wiederholt, jedoch unter Verwendung von 0,3 Teilen Dibutylzinndilaurat anstelle von Kupferoleat als Katalysator. Das Reaktionsgemisch bleibt bei Raumtemperatur 10 Minuten gießbar. Der Gießling kann nach 1,5 Minuten entformt werden, zeigt eine starke Trübung und Blasenbildung und erweicht bei 90—100°C.

Nach einer Temperzeit von 24 h beiu 80°C werden folgende mechanische Eigenschaften gemessen:

| | |
|---|---|
| Zugfestigkeit: | 6,9 MPa |
| Bruchdehnung: | 12,5 KN/m |
| Shore-Härte A: | 52 |

### Beispiel 3
### (Vergleichsversuch):

Beispiel 1 wird wiederholt, jedoch werden als Katalysator 0,3 Teile Eisen-Acetylacetonat

eingesetzt. Das Reaktionsgemisch bleibt bei Raumtemperatur 20 Minuten gießbar. Der Gießling kann nach 10 Minuten entformt werden, zeigt eine sehr starke Blasenbildung und erweicht bei 90 bis 100°C.

Nach einer Temperzeit von 24 h bei 80°C werden folgende mechanische Eigenschaften gemessen:

| | | |
|---|---|---|
| Zugfestigkeit: | 2,7 MPa | |
| Bruchdehnung: | 804% | |
| Weiterreißwiderstand: | 11,2 | KN/m |
| Shore-Härte A: | 50 | |

Beispiel 4
(Vergleichsversuch):

Eine Mischung aus 20 Teilen Butandiol-1,4 und 100 Teilen des Polyesterpolyols aus Beispiel 1 wird bei Raumtemperatur mit 149 Teilen des in Beispiel 1 beschriebenen Prepolymers und 0,06 Teilen eines Katalysatorgemisches aus Triäthylendiamin und Dibutylzinndilaurat (Molverhältnis 1:1) versetzt, 30 Sekunden lang intensiv vermischt und in eine auf 90°C vorgeheizte Form gegossen. Das reagierende Gemisch bleibt bei Raumtemperatur 10 Minuten gießbar. Der Gießling kann nach 3,5 Minuten entformt werden, ist trübe und von zahlreichen Blasen durchsetzt und erweicht bei 100—110°C.

Nach einer Temperzeit von 24 h bei 90°C werden folgende mechanische Eigenschaften gemessen:

| | | |
|---|---|---|
| Zugfestigkeit: | 19,7 | MPa |
| Bruchdehnung: | 520% | |
| Weiterreißwiderstand: | 35 | KN/m |
| Shore-Härte A: | 89 | |

Beispiel 5
(Vergleichsversuch)

Beispiel 4 wird mit 0,3 Teilen der in Beispiel 4 verwendeten Katalysatormischung wiederholt. Die Einrührzeit beträgt 15 Sekunden, die Gießzeit 20 Sekunden. Der Gießling kann nach 1 Minute entformt werden. Erhalten wird ein transparentes, mit Blasen durchsetztes Elastomer.

Nach einer Temperzeit von 24 h bei 110°C hat das Elastomer folgende mechanische Eigenschaften:

| | | |
|---|---|---|
| Zugfestigkeit: | 28,5 | MPa |
| Bruchdehung: | 529% | |
| Weiterreißwiderstand: | 48 | KM/m |
| Shore-Härte A: | 90 | |

Beispiel 6
(Vergleichsversuch):

Beispiel 4 wird wiederholt, jedoch werden als Katalysator 0,1 Teile einer Kombination aus 1,8-Diazabicyclo-(5,4,0)-undecen-7 und Dibutylzinndilaurat (Molverhältnis 1:1) verwendet. Die Arbeitsweise ist analog zu Beispiel 1. Der Gießling zeigt eine leichte Trübung und starke Blasenbildung:

| | | |
|---|---|---|
| Zugfestigkeit: | 18,5 | MPa |
| Bruchdehnung: | 522% | |
| Weiterreißwiderstand: | 40,3 KN/m | |
| Shore-Härte A: | 92 | |

Beispiel 7

Beispiel 4 wird wiederholt, jedoch werden als Katalysator 0,11 Teile einer Kombination aus 0,05 Teilen einer 10 %igen Lösung von Kaliumhydroxid in Butandiol-1,4 und 0,06 Teilen Dibutylzinn-bis-(dodecylmercaptid) verwendet. Das Reaktionsgemisch bleibt bei Raumtemperatur 8 Minuten gießbar. Der Gießling kann nach 5,5 Minuten entformt werden, ist transparent und blasenfrei. Nach einer Temperzeit von 24 h bei 110°C werden folgende mechanische Daten gemessen:

| | |
|---|---|
| Zugfestigkeit: | 31,7 MPa |
| Bruchdehnung: | 512% |
| Weiterreißwiderstand: | 54 KN/m |
| Shore-Härte A: | 91 |

Beispiel 8

Beispiel wird mit 0,22 Teilen der in Beispiel 7 verwendeten Katalysatorkombination wiederholt. Das Reaktionsgemisch bleibt bei Raumtemperatur 6 Minuten gießbar. Der Gießling kann nach 5 Minuten entformt werden, ist transparent und blasenfrei.

Nach einer Temperzeit von 24 h bei 110°C werden folgende mechanische Eigenschaften gemessen:

| | |
|---|---|
| Zugfestigkeit: | 31,5 MPa |
| Bruchdehnung: | 522% |
| Weiterreißwiderstand: | 55 KN/m |
| Shore-Härte A: | 91 |

Beispiel 9

Beispiel 1 wird mit 0,11 Teilen der in Beispiel 7 verwendeten Katalysatorkombination wiedeholt. Das Reaktionsgemisch bleibt bei Raumtemperatur 9,5 Minuten gießbar. Der transparente und blasenfreie Gießling kann nach 6 Minuten entformt werden.

Mechanische Daten:

| | |
|---|---|
| Zugfestigkeit: | 25,3 MPa |
| Bruchdehnung: | 538% |
| Weiterreißwiderstand: | 43 KN/m |
| Shore-Härte A: | 82 |

Beispiel 10

Beispiel 4 wird unter Verwendung einer Katalysatorkombination aus 0,05 Teilen einer 10 %igen Natriumhydroxidlösung in Butandiol-1,4 und 0,06 Teilen Dibutylzinn-bis-(dodecylmercaptid) wiederholt. Das Reaktionsgemisch bleibt bei Raumtemperatur 8,5 Minuten gießbar. Der Gießling kann nach 5 Minuten entformt werden, ist transparent und blasenfrei.

Mechanische Daten:

| | |
|---|---|
| Zugfestigkeit: | 30,2 MPa |
| Bruchdehnung: | 547% |
| Weiterreißwiderstand: | 48 KN/m |
| Shore-Härte A: | 89 |

Beispiel 11

Eine Mischung aus 15 Teilen Butandiol und 80 Teilen des in Beispiel 1 beschriebenen Polyesterdiols wird bei Raumtemperatur mit 0,11 Teilen der in Beispiel 7 verwendeten Katalysatorkombination und 11,6 Teilen des in Beispiel 1 verwendeten NCO-Prepolymeren 45 Sekunden intensiv vermischt (NCO:OH = 1:1). Das reagierende Gemisch bleibt bei Raumtemperatur 4,5 Minuten gießbar. Der Gießling kann nach 4 Minuten bei 100C° entformt werden, ist transparent und blasenfrei.

Mechanische Daten:

| | |
|---|---|
| Zugfestigkeit: | 27,6 MPa |
| Bruchdehnung: | 517% |
| Weiterreißwiderstand: | 53,4 KN/m |
| Shore-Härte A: | 93 |

Beispiel 12

10 Teile Butandiol-1,4, 5 Teile Tripropylenglykol und 80 Teile des in Beispiel 1 beschriebenen Polyesterdiols werden bei Raumtemperatur mit 0,11 Teilen der in Beispiel 7 beschriebenen Katalysatorkombination und 65,15 Teilen des in Beispiel 1 verwendeten NCO-Prepolymers 45 Sekunden intensiv vermischt (NCO:OH = 1:1). Das reagierende Gemisch bleibt bei 50°C 2,5 Minuten gießbar. Der Gießling kann nach 4,5 Minuten entformt werden, ist transparent und blasenfrei.

Mechanische Daten:

| | |
|---|---|
| Zugfestigkeit: | 33,9 MPa |
| Bruchdehnung: | 481% |
| Weiterreißwiderstand: | 49,5 KN/m |
| Shore-Härte A: | 94 |

Beispiel 13

Beispiel 12 wird mit 0,11 Teilen der in Beispiel 10 verwendeten Katalysatorkombination wiederholt. Man erhält ein transparentes, blasenfreies Elastomer mit einer Shore-Härte A von 93.

Beispiel 14

15 Teile Butandiol-1,4, 5 Teile Trimethylolpropan, 5,5 Teile eines Polyätherdiols vom mittleren Molekulargewicht 552 (OH-Zahl: 203) aus 4,4'-Dihydroxydiphenylpropan und Äthylenoxid, und 60 Teile des in Beispiel 1 verwendeten Polyesterdiols werden bei raumtemperatur mit 0,11 Teilen der in Beispiel 7 beschriebenen Katalysatorkombination und 140,2 Teilen des in Beispiel 1 verwendeten Prepolymers 1,5 Minuten intensiv vermischt (NCO:OH = 1:1). Das Reaktionsgemisch bleibt bei Raumtemperatur 7 Minuten gießbar. Der Gießling kann nach 5 Minuten bei 100°C entformt werden, ist transparent und blasenfrei.

Mechanische Daten:

| | |
|---|---|
| Zugfestigkeit: | 32,6 MPa |
| Bruchdehnung: | 511% |
| Weiterreißwiderstand: | 50,1 KN/m |
| Shore-Härte A: | 93 |

Beispiel 15

15 Teile Butandiol-1,4, 5 Teile Trimethylolpropan und 22 Teile des in Beispiel 14 beschriebenen Polyätherpolyols vom mittleren Molekulargewicht 552 werden bei Raumtemperatur mit 0,14 Teilen der in Beispiel 7 verwendeten Katalysatorkombination und 140,2 Teilen des in Beispiel 1 beschreibenen Prepolymers 1,5 Minuten intensiv vermischt (NCO:OH = 1:1). Das reagierende Gemisch bleibt bei 50°C 4,5 Minuten gießbar. Der Gießling ist transparent und blasenfrei.

Mechanische Eigenschaften:

| | |
|---|---|
| Zugfestigkeit: | 35,8 MPa |
| Bruchdehnung: | 532% |
| Weiterreißwiderstand: | 49,4 KN/m |
| Shore-Härte A: | 91 |

Beispiel 16

Beispiel 15 wird mit 0,14 Teilen der in Beispiel 10 beschriebenen Katalysatorkombination wiederholt. Der erhaltene Gießling ist transparent und blasenfrei.

Beispiel 17

15 Teile 1,4-Butandiol, 5 Teile Trimethylolpropan und 80 Teile des in Beispiel 1 beschriebenen Polyesterdiols werden bei Raumtemperatur mit 0,22 Teilen der in Beispiel 7 verwendeten Katalysatorkombination und 94,32 Teilen eines Semiprepolymeren mit einem NCO-Gehalt von 23,6% aus 1-Isocyanato-3,3,5-trimethyl-5-isocyanatomethylcyclohexan und Butandiol-1,4 im Verlaufe von 1,5 Minuten bei 70°C vermischt (NCO:OH = 1:1). Das Reaktionsgemisch bleibt bei Raumtemperatur 5 Minuten gießbar. Dere Gießling kann nach 9 Minuten bei 100°C entformt werden, ist transparent und blasenfrei. Shore-Härte A: 98.

Beispiel 18

Beispiele 17 wird unter Verwendung von 0,22 Teilen der in Beispiel 10 beschriebenen Katalysatorkombination wiederholt. Man erhält ein blasenfreies, transparentes Elastomer mit einer Short-Härte A von 98.

Beispiel 19

(Vergleichsversuch zu den Beispielen 17 und 18):

Beispiel 17 wird unter Verwendung einer Katalysatorkombination aus 0,11 Teilen Dibutylzinndilaurat und 0,04 Teilen Triäthylendiamin wiederholt. Man erhält ein etwas opakes, von Blasen durchsetztes Elastomer mit einer Shore-Härte A von 98.

Beispiel 20

42 Teile der in Beispiel 14 verwendeten Polyolmischung werden mit 0,11 Teilen der in Beispiel 17 verwendeten Katalysatorkombination und 93,4 Teilen des in Beispiel 18 beschriebenen Semiprepolymeren im Verlauf von 1 Minute bei 50°C vermischt. Das Reaktionsgemisch bleibt 6 Minuten bei 50°C gießbar. Der Gießling kann nach 8 Minuten bei 100°C entformt werden, ist blasenfrei und transparent. Shore-Härte A: 94.

Beispiel 21:

95 Teile der in Beispiel 12 verwendeten Polyolmischung und 111,6 Teile des in Beispiel 1 verwendeten Prepolymeren werden mit einer Katalysatorkombination aus 0,05 Teilen einer 10 %igen Kalium- oder Natriumhydroxid-Lösung in Butandiol-1,4 und 0,06 Teilen Zinn-bis-(octylmercaptid) im Verlauf von 1,5 Minuten bei 50°C vermischt. Das reagierende Gemisch bleibt bei 50°C 6 Minuten gießbar. Der Gießling kann nach 10 Minuten bei 100°C entformt werden, ist transparent und blasenfrei. Shore-Härte A = 90.

Beispiel 22

Beispiel 20 wird mit einer Katalysatorkombination aus 0,05 Teilen einer 10 %igen Kalium- oder Natriumhydroxidlösung in Butandiol-1,4 und 0,06 Teilen Blei-bis-(octylmercaptid) wiederholt. Die Topfzeit beträgt 8,5 Minuten. Der Gießling kann nach 10 Minuten bei 100°C entformt werden, ist transparent und blasenfrei. Shore-Härte A: 91.

Beispiel 23

Beispiel 14 wird mit 0,14 Teilen der in Beispiel 20 verwendeten Katalysatorkombination wiederholt. Man erhält ein blasenfreies, transparentes Elastomer. Shore-Härte A: 97.

Beispiel 24

Beispiel 16 wird mit 0,22 Teilen der in Beispiel 21 verwendeten Katalysatorkombination wiederholt. Man erhält ein blasenfreies, transparentes Elastomer mit einer Shore-Härte A: von 97.

Beispiel 25

Beispiel 17 wird mit 0,22 Teilen der in Beispiel 22 beschriebenen Katalysatorkombination wiederholt. Der erhaltene Polyurethangießling ist transparent und blasenfrei. Shore-Härte A: 98.

**Patentansprüche**

1. Verfahren zur Herstellung eines lichtechten, transparenten Polyurethanelastomeren durch Umsetzung von

A) 90 bis 50 Gew.-%, bezogen auf Polyurethanfeststoff, einer mindestens 2 Zerewitinoff-aktive Wasserstoffatome aufweisenden Verbindung vom Molekulargewicht 400 bis 10 000,

B) 50 bis 10 Gew.-%, bezogen auf Polyurethanfeststoff, eines aliphatischen und/oder alicyclischen Polyisocyanats,

C) 0 bis 20 Gew.-%, bezogen auf Polyurethanfeststoff, eines Kettenverlängerungsmittels vom Molekulargewicht 60 bis 400, in Gegenwart von

D) Katalysatoren für die Isocyanat-Polyadditionsreaktion,

dadurch gekennzeichnet, daß als Komponente D) eine Katalysator-Kombination aus

a) einem Alkali- und/oder Erdalkalihydroxid, insbesondere Lithium-, Natrium-, Kalium-, Magnesium- und/oder Calciumhydroxid und

b) einer schwefelhaltigen metallorganischen Verbindung der allgemeinen Formeln

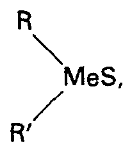 , 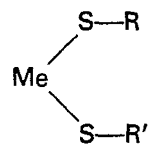 und

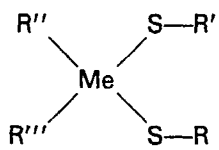

in denen

Me Zinn oder Blei darstellt und

R, R', R'' und R''' gleich oder verschieden sind und für einen verzweigten oder linearen Alkylrest mit 1 bis 20 C-Atomen oder einen gegebenenfalls durch $C_1$—$C_4$-Alkylgruppen substituierten Cycloalkylrest mit 6 bis 15 C-Atomen oder einen gegebenenfalls durch $C_1$—$C_4$-Alkylgruppen oder Halogen substituierten Phenylrest stehen,

verwendet wird.

2. Verfahren nach Anspruch 1 und 2, dadurch gekennzeichnet, daß 0,01 bis 0,8 Gew.-%, bezogen auf Polyurethanfeststoff, der Komponente D) eingesetzt werden.

3. Verfahren nach Anspruch 1 bis 3, dadurch gekennzeichnet, daß in Komponente D) das Molverhältnis von Alkali- und/oder Erdalkalihydroxid zu metallorganischer Verbindung zwischen 3:1 und 1:6 liegt.

4. Verfahren nach Anspruch 3, dadurch gekennzeichnet, daß das Molverhältnis zwischen 1,5:1 und 1:3 liegt.

5. Verfahren nach Anspruch 1 bis 5, dadurch gekennzeichnet, daß das Alkali- und/oder Erdalkalihydroxid in Form einer 1 bis 20 Gew.-%igen Lösung in Komponente C) eingesetzt wird.

6. Verwendung der gemäß Anspruch 1 bis 5 erhältlichen transparenten Polyurethane für biomedizinische Zwecke oder als Beschichtungsmaterial.

**Revendications**

1. Procédé de production d'un élastomère en polyuréthanne transparent, solide à la lumière, par réaction

A) de 90 à 50% en poids, par rapport à la matière solide formée du polyuréthanne, d'un composé d'un poids moléculaire de 400 à 10 000 portant au moins 2 atomes d'hydrogène actif selon Zerewitinoff,

B) de 50 à 10% en poids, par rapport à la matière solide formée de polyuréthanne, d'un polyisocyanate aliphatique et/ou alicyclique,

C) de 0 à 20% en poids, par rapport à la matière solide formée de polyuréthanne, d'un agent d'allongement de chaîne d'un poids moléculaire de 60 à 400, en présence

D) de catalyseurs pour la réaction de polyaddition d'un isocyanate,

caractérisé en ce qu'on utilise comme composant D) un catalyseur comprenant en association

a) un hydroxyde alcalin et/ou alcalino-terreux, notamment l'hydroxyde de lithium, de sodium, de potassium, de magnésium et/ou de calcium et

b) un composé organométallique contenant du soufre, de formules générales:

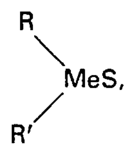,
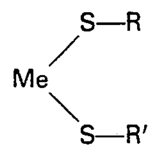
et

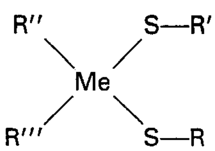

dans lesquelles

Me représente l'étain ou le plomb et

R, R', R'' et R''' sont égaux ou différents et représentent un reste alkyle ramifié ou linéaire ayant 1 à 20 atomes de carbone ou un reste cycloalkyle de 6 à 15 atomes de carbone substitué le cas échéant par des groupes alkyle en $C_1$—$C_4$ ou un reste phényle éventuellement substitué par des groupes alkyle en $C_1$—$C_4$ ou par un halogène.

2. Procédé suivant le revendication 1, caractérisé en ce qu'on utilise 0,01 à 0,8% en poids de composant D) par rapport à la matière solide formée de polyuréthanne.

3. Procédé suivant les revendications 1 et 2, caractérisé en ce que le rapport molaire de l'hydroxyde alcalin et/ou alcalino-terreux au composé organométallique dans le composant D) se situe entre 3:1 et 1:6.

4. Procédé suivant la revendication 3, caractérisé en ce que le rapport molaire se situe entre 1,5:1 et 1:3.

5. Procédé suivant les revendications 1 à 4, caractérisé en ce que l'hydroxyde alcalin et alcalino-terreux est utilisé sous la forme d'une solution à 1—20% en poids dans le composant C).

6. Utilisation des polyuréthannes transparents obtenus conformément aux revendications 1 à 5 à des fins biomédicales et comme matière d'enduction.

**Claims**

1. Process for the production of a light fast, transparent polyurethane elastomer by the reaction of:

(A) from 90 to 50%, by weight, based on the polyurethane solids content, of a compound having a molecular weight of from 400 to 10,000 which has at least two Zerewitinoff active hydrogen atoms;

(B) from 50 to 10%, by weight, based on the polyurethane solids content, of an aliphatic and/or alicyclic polyisocyanate; and

(C) from 0 to 20%, by weight, based on the polyurethane solids content, of a chain-lengthening agent having a molecular weight of from 60 to 400; in the presence of:

(D) catalysts for the isocyanate polyaddition reaction,

characterised in that the substance used as component (D) is a catalyst combination of:

(a) an alkali metal hydroxide and/or alkaline earth metal hydroxide, in particular a hydroxide of lithium, sodium, potassium, magnesium and/or calcium; and

(b) a sulphur-containing organometallic compound of the general formulae

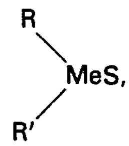, 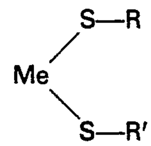 and

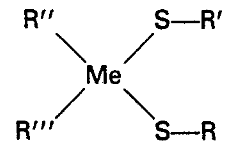

wherein

Me represents tin or lead and

R, R', R'' and R''' which may be the same or different, each represents a straight- or branched-chain alkyl group having from 1 to 20 carbon atoms or a cycloalkyl group having from 6 to 15 carbon atoms optionally substituted by $C_1$—$C_4$ alkyl groups or a phenyl group optionally substituted by $C_1$—$C_4$ alkyl groups or by halogen.

2. Process according to Claim 1, characterised in that component (D) is used in a quantity of from 0.01 to 0.8%, by weight, based on the polyurethane solids content.

3. Process according to Claims 1 and 2, characterised in that in component (D), the molar ratio of alkali metal hydroxide and/or alkaline earth metal hydroxide to organometallic compound is from 3:1 to 1:6.

4. Process according to Claim 3, characterised in that the molar ratio is from 1.5:1 to 1:3.

5. Process according to Claims 1 to 4, characterised in that the alkali metal hydroxide and/or alkaline earth metal hydroxide is used in the form of a from 1 to 20%, by weight, solution in component (C).

6. Use of the transparent polyurethanes obtainable according to Claims 1 to 5 for bio-medical purposes or as coating material.